# EUROPEAN PATENT APPLICATION

(11) **EP 1 586 757 A1**
(43) Date of publication of application: **19.10.2005**
(21) Application number: 04702049.0
(22) Date of filing: 14.01.2004
(51) Int. Cl.: F02D 13/02, F02D 15/04

(54) **METHOD OF CONTROLLING PREMIX COMPRESSION SELF-IGNITING INTERNAL COMBUSTION ENGINE**

(30) Priority: 14.01.2003 JP 2003006063
(71) Applicant: Yanmar Co., Ltd., Osaka-shi, Osaka 530-0013 (JP)
(72) Inventor: ASAI, Gou, c/o YANMAR CO., LTD., Osaka-shi, Osaka 530-0013 (JP)
(74) Representative: Pluckrose, Anthony William
(86) International application number: PCT/JP2004/000192
(87) International publication number: WO 2004/063545

(57) **Abstract**

A method of controlling a premix compression self-igniting internal combustion engine in which intake air and fuel are mixed in advance in a combustion chamber and the mixture is self-ignited by compression. Optimal self-ignition timing in accordance with operation condition can be obtained with the method for improved combustion. An exhaust valve (9) is temporarily reopened during a compression stroke, and timing of closing the reopened valve is variable, so that timing of the closure is varied for an effective compression ratio at which optimal self-igniting timing can be obtained at each operation region. A valve closure timing map for the exhaust valve reopening is formed from an engine speed and load, and closure timing of the exhaust valve (9) is varied based on the map. The closure timing of the exhaust valve (9) is varied such that an effective compression ratio is increased in an operation region where the load is small, and the ratio is reduced with an increase in the load.

## Description

### Technical Field

The present invention relates to a control method of premix compression self-igniting internal combustion engine, and more particularly to a control method suited to diesel engine.

### Background Art

This kind of premix compression self-igniting internal combustion engine has been developed for improving the combustion of diesel engine, and is a combustion system characterized by forming a mixed gas of fuel and air preliminarily in a combustion chamber, raising the temperature and pressure of the mixed gas by adiabatic compression by a piston, and self-igniting at ignition point of fuel. According to this system, super-lean combustion is realized in diesel engine, and reduction of NOx and smoke is achieved. Prior arts are disclosed, for example, in Japanese Unexamined Patent Publication No. 2001-271571 and Japanese Unexamined Patent Publication No. 2001-280164.

### Disclosure of Invention

In the case of a conventional diesel engine in which the effective compression ratio is fixed, when the load (equivalent ratio) increases, the self-igniting timing may be advanced in the midst of compression, which may possibly lead to so-called knocking phenomenon. Knocking causes to increase the engine noise and lower the thermal efficiency.

At low load, to the contrary, even right after compression, igniting conditions of pressure, temperature and others may not be sufficiently ready, which may result in misfiring.

Self-ignition of premix compression self-igniting internal combustion engine depends basically on the temperature of mixed gas and cylinder internal pressure, and the temperature and cylinder internal pressure are determined mainly by the effective compression ratio. For example, to avoid knocking due to preignition, and it is necessary to suppress elevation of temperature of mixed gas and pressure during compression below self-ignition limit values, and to self-ignite at best ignition timing, that is, near the top dead center of compression, the temperature and pressure must be optimally controlled at the top dead center of compression.

It is hence an object of the invention to prevent knocking and misfiring by varying the effective compression ratio by changing the reopened valve closure timing of exhaust valve, and controlling to self-ignite at optimum timing in each operation region.

To solve the problems, the invention as set forth in claim 1 relates to a control method of premix compression self-igniting internal combustion engine for premixing air and fuel in a combustion chamber, and self-igniting the mixture by compression, comprising the steps of temporarily reopening an exhaust valve in compression stroke, freely varying the reopened valve closure timing, and changing the effective compression ratio to an effective compression ratio capable of obtaining an optimum self-ignition timing in each operation region.

The invention as set forth in claim 2 relates to the control method of premix compression self-igniting internal combustion engine of claim 1, in which the reopened valve closure timing is controlled so as to heighten the effective compression ratio in a small load operation region, and lower the effective compression ratio along with the increase of load.

The invention as set forth in claim 3 relates to the control method of premix compression self-igniting internal combustion engine of claim 1, in which a reopened valve closure timing map is compiled by describing the vale closure timing for obtaining an optimum ignition timing in each operation region depending on the engine speed and load, the engine speed and load are detected during operation of the engine, and the reopened valve closure timing is varied on the basis of the valve closure timing map.

The invention as set forth in claim 4 relates to the control method of premix compression self-igniting internal combustion engine of claim 1, in which the fuel injection start timing is delayed from the reopened valve closure timing.

The invention as set forth in claim 5 relates to the control method of premix compression self-igniting internal combustion engine of claim 1, in which the engine includes an EGR device, and EGR rates are detected, and thereby the effective compression ratio is heightened by advancing the reopened valve closure timing in an operation region of high EGR rate, and the effective compression ratio is lowered by retarding the reopened valve closure timing in an operation region of low EGR rate.

The invention as set forth in claim 6 relates to the control method of premix compression self-igniting internal combustion engine of claim 1, in which the intake air temperature is detected, and the effective compression ratio is lowered by retarding the reopened valve closure timing when the intake air temperature is high, and the reopened valve closure timing is advanced when the intake air temperature is low.

The invention as set forth in claim 7 relates to the control method of premix compression self-igniting internal combustion engine of claim 1, in which the cooling water temperature is detected, and the effective compression ratio is heightened by advancing the closure timing of the reopened exhaust valve when the cooling water temperature is low, and the reopened valve closure timing is retarded when the cooling water temperature is high.

The invention as set forth in claim 8 relates to the control method of premix compression self-igniting internal combustion engine of any one of claims 1 to 7, in which knocking or other abnormal combustion is detected by an abnormal combustion detection sensor, and the reopened valve closure timing is retarded in the event of abnormal combustion and controlled to be changed to a highest effective compression ratio in a range not to cause abnormal combustion.

The invention as set forth in claim 9 relates to the control method of premix compression self-igniting internal combustion engine of any one of claims 1 to 8, in which a limiting effective compression ratio map for suppressing the maximum cylinder internal pressure within an allowable range in each operation region is compiled, and the reopened valve closure timing is set so as not to exceed the limiting effective compression ratio in each operation region.

As described herein, the invention presents a control method of premix compression self-igniting internal combustion engine for premixing air and fuel in a combustion chamber, and self-igniting the mixture by compression, comprising the steps of temporarily reopening an exhaust valve in compression stroke, freely varying the reopened valve closure timing, and changing the effective compression ratio to an effective compression ratio capable of obtaining an optimum self-ignition timing in each operation region, and thereby brings about the following merits.
(1) The ignition timing of a premix compression self-igniting internal combustion engine which was hitherto difficult to control is controlled by changing and adjusting reopening of exhaust valve, in particular by changing and adjusting its valve closure timing, the optimum effective compression ratio in each operation region and optimum self-ignition timing can be controlled easily and accurately, and thereby excessively advanced ignition can be suppressed (lowering of thermal efficiency is arrested), combustion noise is reduced, and low injection combustion in a wide operation range can be easily realized. Besides, misfiring due to delay in ignition can be prevented effectively.
(2) In addition to the configuration of (1), in an operation region of small load, the effective compression ratio is set higher, and the effective compression ratio is set lower as the load increases, and by such valve closure timing control of reopened exhaust valve, ignition delay is corrected and a favorable ignition is assured when the load decreases, or excessively advanced ignition is suppressed and knocking can be prevented effectively when the load increases.
(3) In addition to the configuration of (1), by the engine speed and load, a closure timing map of reopened exhaust valve is compiled, and the exhaust valve closure timing is changed according to the closure timing map of reopened exhaust valve, and since the engine speed and load which are generally sensed and detected in an electronically controlled engine are used as parameters, the control logic is simple, and the operation of exhaust valve can be defined easily.
(4) In addition to the configuration of (1), by delaying the fuel injection start timing from the reopened valve closure timing, escape of injection combustion from exhaust hole when reopening can be prevented, and waste of fuel can be prevented.
(5) In addition to the configuration of (1), in an internal combustion engine provided with an EGR device, by advancing the valve closure timing of reopened exhaust valve in an operation region of high EGR rate, the effective compression ratio is set higher, or by retarding the valve closure timing of reopened exhaust valve in an operation region of low EGR rate, the effective compression ratio is set lower, and by such control if the ignition performance (self-ignition timing) of mixed gas varies along with change in EGR rate, the ignition timing can be corrected to an optimum timing.
(6) In addition to the configuration of (1), by detecting the intake air (supply air) temperature, the effective compression ratio is lowered by retarding the closure timing of reopened exhaust valve when the intake air temperature is high, and the closure timing of reopened exhaust valve is advanced when the intake air temperature is low, and therefore if the ignition performance of mixed gas varies along with change of intake air temperature, the ignition timing can be corrected to an optimum timing.
(7) In addition to the configuration of (1), by detecting the cooling water temperature, the effective compression ratio is heightened by advancing the closure timing of reopened exhaust valve when the cooling water temperature is low, and the closure timing of reopened exhaust valve is retarded when the cooling water temperature is high, and therefore if the ignition performance of mixed gas varies along with change of cooling water temperature, the ignition timing can be corrected to an optimum timing.
(8) In addition to the configuration of (1), when knocking is detected by a knock sensor, the effective compression ratio is lowered, and a highest effective compressive ratio is maintained within knock limits, if knocking occurs due to excessively advanced ignition under the above control by large changes in operating conditions, it can be corrected to a non-knocking range, and the thermal efficiency is maintained as high as possible within a scope not causing knocking.
(9) A limiting effective compression ratio map for suppressing the maximum cylinder internal pressure within an allowable range in each operation range is compiled, and the closure timing of reopened exhaust valve is set so as not to exceed the limiting effective compression ratio in each operation region, and therefore if an excessive cylinder internal pressure occurs in the above control, the cylinder internal pressure can be easily and quickly corrected to lower than the allowable maximum cylinder internal pressure, so that effects on cylinders can be eliminated.
(10) Meanwhile, as the effect of reopening the exhaust valve in compression stroke, in an internal combustion engine equipped with supercharger, if the supercharger performance is raised to increase the supercharging pressure, the intake air to be exhausted does not work as resistance to pressurized intake air entering the combustion chamber from the intake port, and the intake air flow rate can be sufficiently assured, and also the load of the supercharger is lessened and the supercharger efficiency is enhanced. As compared with the delayed closing method of intake valve, elevation of intake air temperature in intake port can be prevented, and decline of filling efficiency can be prevented.

### Brief Description of Drawings

Fig. 1 is a block diagram of premix compression self-igniting diesel engine for executing a control method of the invention.
Fig. 2 is a perspective view of variable actuating valve system for exhaust.
Fig. 3 is a sectional view of cut section at right angle to axial center of exhaust cam in Fig. 2, showing a parallel arrangement of both exhaust cams.
Fig. 4 is a plan view of cam for reopening of variable actuating valve system of Fig. 2.
Fig. 5 is a schematic sectional view of cylinder in piston stroke for reopening.
Fig. 6 is a flowchart showing a first control method of the invention.
Fig. 7 is a diagram showing the relation of exhaust valve reopening and cylinder internal temperature changes.
Fig. 8 is a diagram showing the relation of cylinder internal temperature and ignition delay.
Fig. 9 is a diagram showing the relation of equivalent ratio and self-igniting temperature.
Fig. 10 is a diagram showing an effective operation region corresponding to engine speed and load changes.
Fig. 11 is a diagram of valve closure timing map.
Fig. 12 is a diagram showing the relation of reopened valve closure timing and injection start timing.
Fig. 13 is a flowchart showing a second control method of the invention.
Fig. 14 is a diagram showing the relation of EGR rate and ignition timing.
Fig. 15 is a diagram showing the relation of EGR rate and target effective compression ratio.
Fig. 16 is a flowchart showing a third control method of the invention.
Fig. 17 is a diagram showing the relation of intake air temperature and ignition timing.
Fig. 18 is a diagram showing the relation of intake air temperature and target effective compression ratio.
Fig. 19 is a flowchart showing a fourth control method of the invention.
Fig. 20 is a diagram showing the relation of cooling water temperature and ignition timing.
Fig. 21 is a diagram showing the relation of cooling water temperature and target effective compression ratio.
Fig. 22 is a flowchart showing a sixth control method of the invention.
Fig. 23 is a diagram showing the relation of ignition characteristic and effective operation region.
Fig. 24 is a flowchart showing a seventh control method of the invention.
Fig. 25 is a diagram showing changes of cylinder internal pressure.

### Best Mode for Carrying Out the Invention

Referring now to the accompanying drawings, the invention is more specifically described below.

### [Outline of engine]

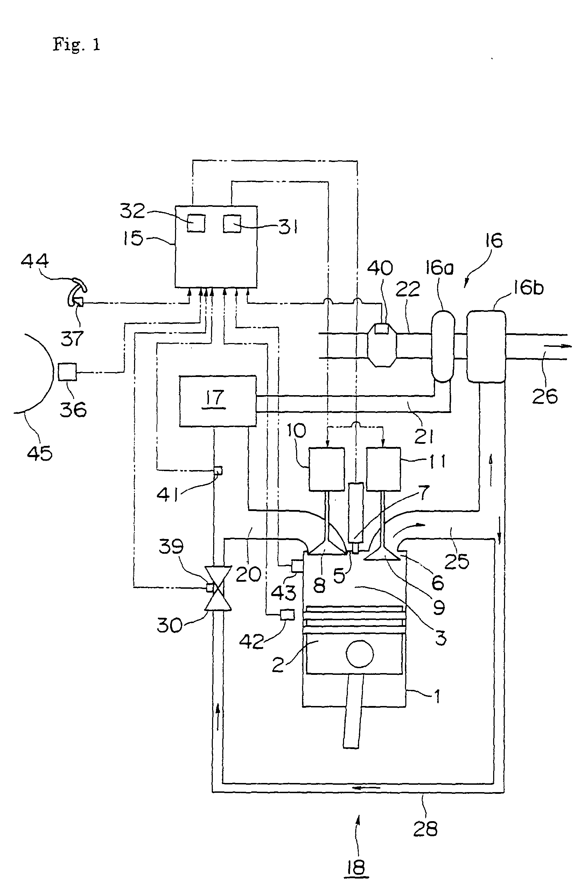

Fig. 1 to Fig. 5 show a premix compression self-igniting diesel engine for executing the control method of the invention, and Fig. 1 is a schematic diagram including an arrangement of cylinder section, suction and exhaust devices, and control device. In Fig. 1, a piston 2 is fitted into a cylinder 1, a combustion chamber 3 is formed by the top wall of the piston 2 and the cylinder 1, an intake hole 5 and an exhaust hole 6 are opened in the ceiling of the combustion chamber 3, and also an electronically controlled fuel injection valve 7 is disposed. An intake valve 8 and an exhaust valve 9 are placed in the intake hole 5 and exhaust hole 6 respectively, and the both valves 8, 9 are linked and coupled to a actuating valve system for intake 10 and a variable actuating valve system for exhaust 11 respectively. The variable actuating valve system for exhaust 11 is designed to reopen the exhaust valve 9 temporarily in compression stroke, and the reopened valve closure timing can be varied by valve closure timing changing means.

Engine peripheral devices include an engine controller 15, a supercharger 16, an intercooler 17, and an EGR (exhaust gas recirculation) device 18. The intake hole 5 communicates with the atmosphere by way of intake passage 20, intercooler 17, intake pipe 21, compressor 16a of supercharger 16, and intake pipe 22, and the exhaust hole 6 communicates with the atmosphere by way of exhaust passage 25, turbine 16b of supercharger 16, and exhaust pipe 26. The EGR pipe 28 of the EGR device 18 communicate between the exhaust passage 25 and intake passage 20, and the EGR pipe 28 is provided with an EGR valve 30 capable of adjusting the opening degree.

The engine controller 15 includes an injection device ECU (injection valve electronic control unit) 31 and an actuating valve system ECU (actuating valve system electronic control unit) 32, together with CPU, arithmetic unit, and various storage devices. At the output section of the engine controller 15, the fuel injection valve 7 and actuating valve systems 10, 11 are connected, and the fuel injection valve 7 is controlled in its fuel injection amount and injection start timing by means of the injection device ECU 31, and the actuating valve systems 10, 11 are controlled in the valve opening and closing timing by means of the actuating valve system ECU 32. In particular, in the variable actuating valve system for exhaust 11, the closure timing of the reopened exhaust valve 9 is controlled.

At the input section of the engine controller 15, an engine speed sensor 36 and a load sensor 37 are connected, and further, as required, EGR rate recognition device 39, air (intake air) flow rate sensor 40, intake air temperature sensor 41, cooling water temperature sensor 42, and abnormal combustion detection sensor (knock sensor) 43 are connected.

The EGR rate recognition device 39 is provided in the EGR valve 39, and it is designed to detect (recognize) the EGR rate. The load sensor 37 is provided in an accelerator device 44, or fuel increase or decrease mechanism of fuel injection pump, and it is designed to detect the fuel injection amount as the load. The abnormal combustion detector 43 is disposed in the side wall of cylinder 1 or in the cylinder 1, and detects abnormal vibrations of the cylinder 1 or abnormal pressure fluctuations in the combustion chamber, and thereby detects abnormal combustion such as knocking. The air flow rate sensor 40 is provided in the intake pipe 22 at the upstream side from the supercharger 16, and detects the flow rate of air flowing in the intake pipe 22. The engine speed sensor 36 is disposed in crankshaft or gear 45 fixed on crankshaft or in wheel, and detects the number of revolutions of the crankshaft (engine speed). The cooling water temperature sensor 42 is disposed in the cooling water jacket, for example, around the cylinder, and detects the cooling water temperature near the cylinder. This embodiment is applied in the internal combustion engine having the EGR device, but may be also applied in an internal combustion engine not having EGR device.

### [Specific example of variable actuating valve system for exhaust]

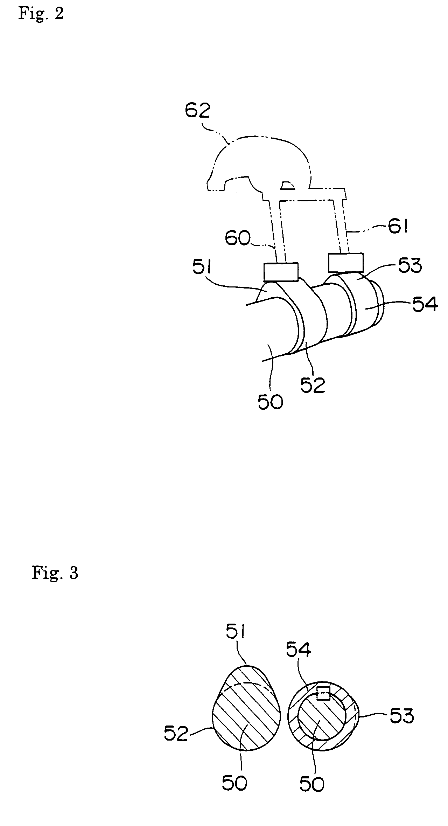

The variable actuating valve system for exhaust 11 in Fig. 1 is composed so as to be capable of reopening as mentioned above, and the closure timing of the reopened valve is variable. A specific example is shown in Fig. 2 to Fig. 4. The variable actuating valve system for exhaust 11 in Fig. 2 to Fig. 4 is a actuating valve system using plural cams, and in the perspective view in Fig. 2, a cam shaft 50 for exhaust valve is provided with a first exhaust cam 52 having a main cam thread 51 for exhaust stroke, and a second exhaust cam 54 having a movable cam thread 53 for reopening, these exhaust cams 52, 54 are coupled to a same exhaust rocker arm 62 by way of tappets 60, 61, respectively, so as to be used simultaneously in parallel. The first exhaust cam 52 is formed integrally with the cam shaft 50, but the second exhaust cam 53 is formed separately from the cam shaft 50 as shown in Fig. 3, and rotates integrally with the cam shaft 50 in the rotating direction, but is fitted by key or spline so that the position can be changed in the axial center direction.

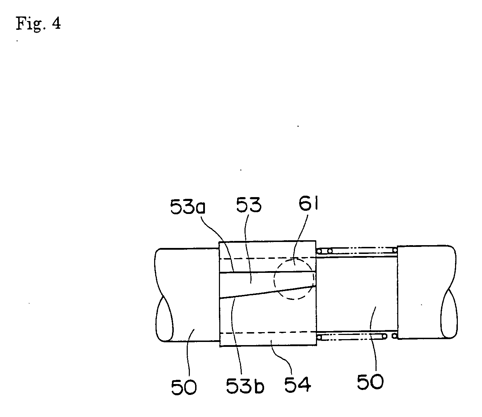

Fig. 4 is a plan view of the second exhaust cam 54, and the movable cam thread 53 changes in the width in the peripheral direction along the axial direction, and by changing the position of the second exhaust cam 54 in the axial direction with respect to the cam shaft 50, the profile of the cam thread 53 contacting with the tappet 61 is changed, and therefore the reopening timing and closure timing of reopened valve can be changed. In this embodiment, in order that the valve reopening timing may always coincide nearly with the bottom dead center, the front end 53a in the rotating direction of the cam thread 53 is set parallel to the axial center direction, and on the other hand, in order that the valve closure timing may be changed freely, the rear end 53b in the rotating direction of the cam thread 53 is inclined to the axial center direction. In Fig. 4, in order to clarify the shape of the movable cam thread 53, the border of the movable cam thread 53 and cam circle of second exhaust cam 54 is indicated by solid line, but actually, not having step difference, the cams are continuous smoothly.

The variable actuating valve system for exhaust 11 shown in Fig. 2 to Fig. 4 is a mere example, and aside from such structure, for example, in a variable actuating valve system for exhaust, as shown in Fig. 2, comprising a first exhaust cam 52 having main cam thread 51 for exhaust stroke, and a second exhaust cam 54 having a movable cam thread 53 for reopening, the second exhaust cam 54 for reopening can be changed in position in rotating direction with respect to the cam shaft 50, and the position of the movable cam 53 for reopening is deviated in the rotating direction, so that the valve closure timing can be varied. In this case, the portion corresponding to valve opening timing at the front end in the rotating direction of the movable cam thread 53, it is formed so as to overlap always with the main cam thread 51 of the first exhaust cam 52.

Besides, by using plural types of exhaust cam integrally having the cam thread for exhaust stroke and cam thread for reopening, phases of each cam thread for reopening may be different, and it may be designed to change over in plural stages.

### [Reopening stroke]

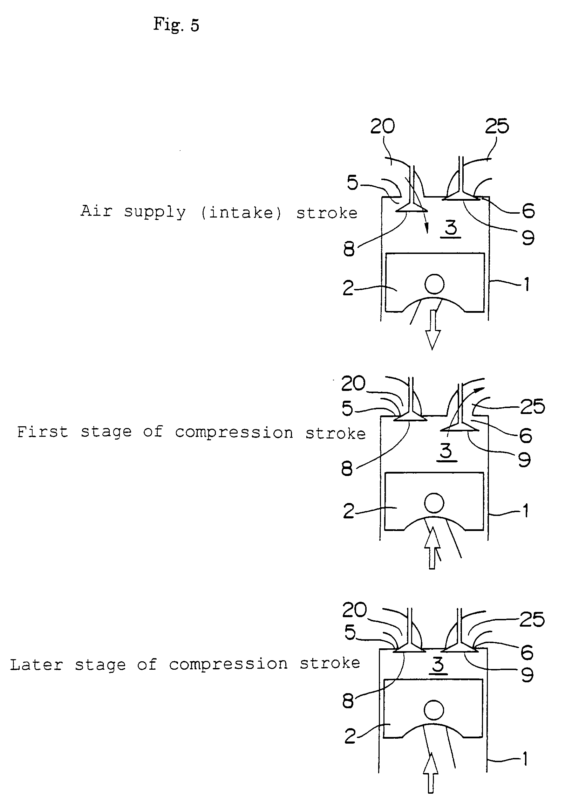

Fig. 5 shows a mode of reopening of exhaust valve in an engine, in which in the intake stroke shown in the top stage, since the intake valve 8 is open, intake air is supplied into the combustion chamber 3 from the intake hole 5, and in the pre-compression stroke of piston elevation stroke shown in the middle stage, the intake valve 8 is closed, and the exhaust valve 9 begins to reopen temporarily from near the bottom dead center, and compression pressure in the combustion chamber 3 is released from the exhaust port 6. In the mid- and post-compression stroke shown in the bottom stage, the reopened exhaust valve 9 is also closed, and the intake air is compressed substantially. That is, by temporary reopening of exhaust valve 9 from the position near the bottom dead center, the compression start time is delayed, so that the effective compression ratio can be lowered.

### [Combustion control method 1]

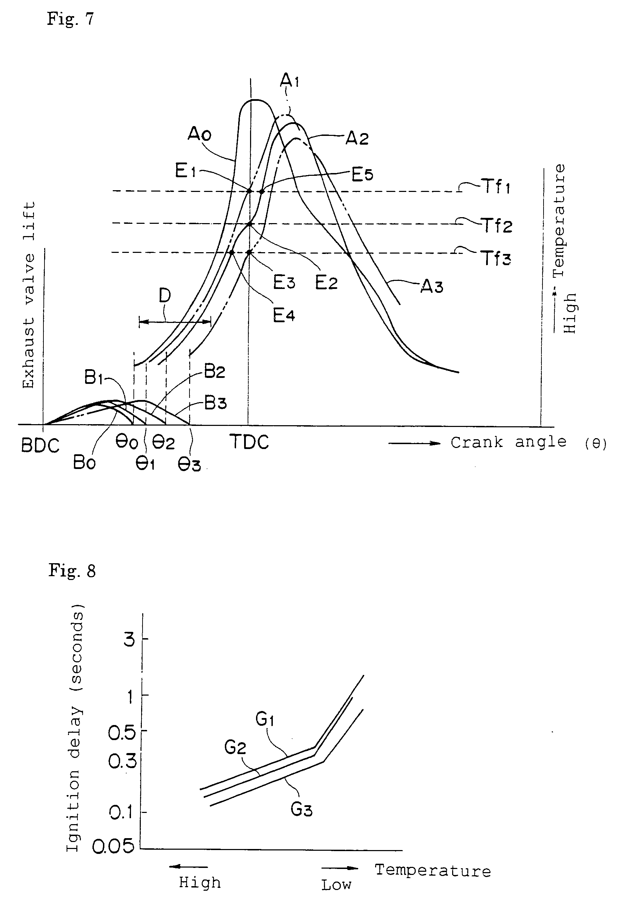

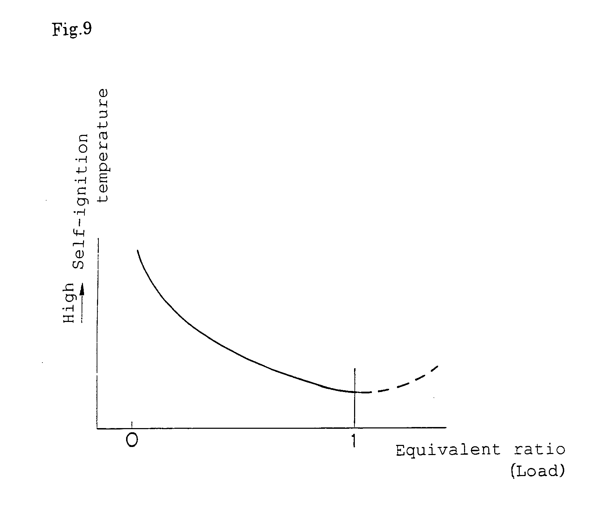

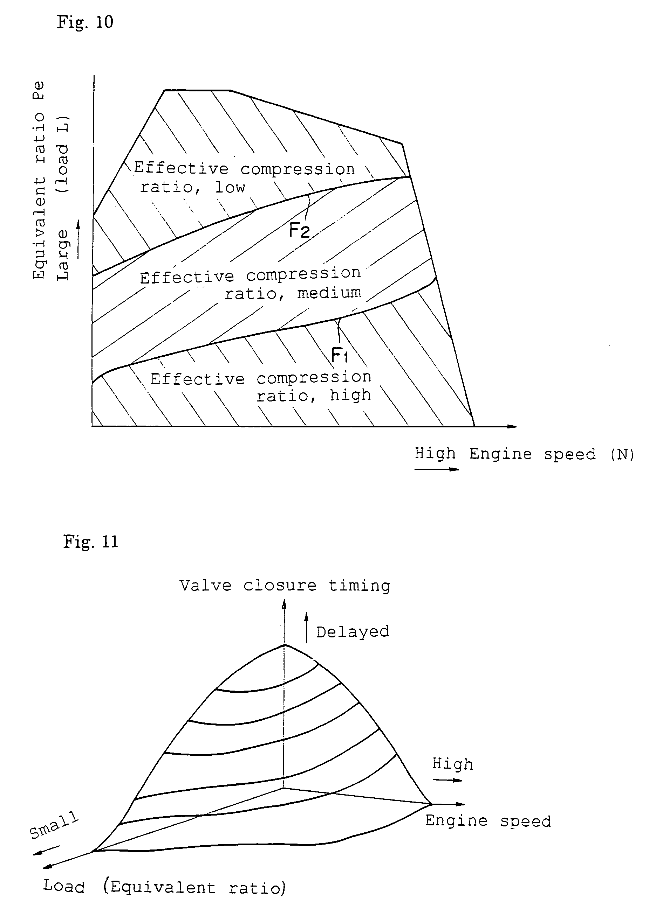

Before explaining the combustion control method, refer to Fig. 7 to Fig. 10, showing the relation of closure timing of reopened exhaust valve 9, cylinder internal temperature, and ignition timing (Fig. 7), showing the relation of cylinder internal temperature and ignition delay (Fig. 8), showing the relation of equivalent ratio (load) and self-igniting temperature (Fig. 9), and showing the relation of engine speed and load changes and effective operation region of engine (Fig. 10).

### (Relation of cylinder internal temperature and ignition delay)

Fig. 8 shows provisional experiment data of relation of changes of cylinder internal temperature and cylinder internal pressure, and ignition delay, and variation curves G1, G2, G3 are in the relation of cylinder internal pressure of G1 < G2 < G3. Variation curves G1, G2, G3 are common in characteristic that the self-ignition delay is shorter as the cylinder internal temperature becomes higher, but as the pressure rises from curve G1 of low pressure to curves G2 and G3, it is understood that the ignition delay becomes shorter.

### (Relation of closure timing of reopened exhaust valve, cylinder internal temperature and ignition timing)

Fig. 7 shows how the cylinder internal temperature (A0 to A3) is changed when the closure timing θec of reopened exhaust valve (B0 to B3) is changed, for example, to θ0, θ1, θ2 and θ3. The axis of ordinates represents the exhaust valve lift amount and cylinder internal temperature, and the axis of abscissas denotes the crank angle. As understood from Fig. 7, as the closure timing θec of reopened exhaust valve is sequentially delayed from θ0 to θ3, the effective compression ratio becomes lower, and the rise of cylinder internal temperature is delayed, and the ignition timing is also delayed.

More specifically, Fig. 7 shows four examples of reopening B0, B1, B2 B3 changing in the closure timing θec from θ0 to θ3, and the valve opening timings of reopening B0 to B3 are gathered around the bottom dead center (BDC) of compression stroke (bottom dead center of exhaust stroke). Variation curves A0, A1, A2 and A3 of cylinder internal temperature correspond to reopening B0, B1, B2, B3, respectively. Incidentally, Tf1, Tf2, Tf3 are self-ignition temperatures changing depending on the conditions of equivalent ratio and others.

In Fig. 7, when the valve closure timing θec is the earliest reopening B0, by assuring a long actual compression stroke, the effective compression ratio becomes higher, and hence the temperature rise is the earliest and the cylinder internal maximum temperature is the highest. As compared with reopening B0, as the valve closure timing θec is delayed as reopening B1, B2, B3, the effective compression ratio is sequentially lowered, the temperature rise is delayed, and the cylinder internal maximum temperature also declines.

The ignition timing is determined from the intersection of cylinder internal temperature variation curves A0, A1, A2, A3 and self-ignition temperature Tf1, Tf2, Tf3, but at any self-ignition temperature Tf1, Tf2, Tf3, the ignition timing is the earliest in the cylinder internal temperature variation curve A0 corresponding to the earliest valve closure timing θ0, and as the valve closure timing is delayed to θ1, θ2, θ3, the ignition timing of the corresponding variation curves A1, A2, A3 is sequentially delayed. That is, in this relation, as the reopened valve closure timing θec is advanced, the self-ignition timing is also advanced, and as the valve closure timing θec is delayed, the self-ignition timing is also delayed.

### (Relation of equivalent ratio (load) and cylinder internal temperature)

Fig. 9 shows the relation of equivalent ratio and self-ignition temperature, in which the self-ignition temperature declines as the equivalent ratio of mixed gas in the combustion chamber becomes higher, that is, as the load increases. In other words, when the load (injection amount) increases, the self-ignition temperature declines and thereby the self-ignition timing is advanced. (Effective operation region in relation to engine speed and load changes).

Fig. 10 shows the effective operation region of engine in relation to changes of equivalent ratio (load) and engine speed, in which the effective operation region is divided into three sections, high, medium and low effective compression ratios, but this is an expression for the sake of convenience and actually the effective compression ratio is varied steplessly in order to assure the optimum self-ignition timing.

In Fig. 10, when the equivalent ratio (load) is large as mentioned above, the self-ignition temperature tends to decline, and by lowering the effective compression ratio, the self-ignition timing is retarded, and changed to an optimum timing near the top dead center. As a result, an optimum combustion can be obtained. On the other hand, when the equivalent ratio (load) is small, the injection amount (or equivalent ratio) is smaller, and the self-ignition temperature tends to rise, and by heightening the effective compression ratio, the self-ignition timing is advanced, and changed to an optimum timing near the top dead center. As a result, an optimum combustion can be obtained.

### (Closure timing map of reopened valve)

Fig. 11 is a closure timing map of reopened valve written in the storage device of engine controller in Fig. 1, and the map is compiled so that on the basis of the relation explained in Fig. 7 to Fig. 9, concerning the load, along with increase of load, the valve closure timing is retarded, and concerning the engine speed, along with increase of engine speed, the valve closure timing is advanced, and thereby the optimum effective compression ratio and optimum ignition timing near the top dead center may be always obtained in any situation of operation.

### (Setting of fuel injection timing in relation to reopened valve closure timing)

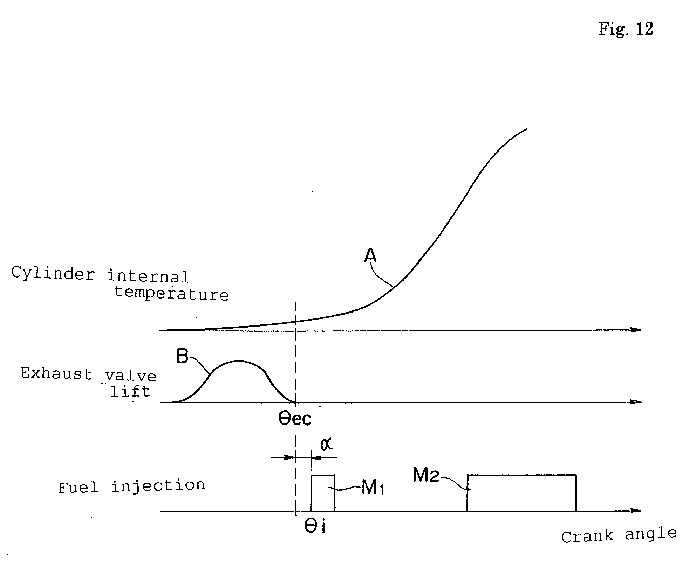

In Fig. 12, the axis of abscissas denotes the crank angle, the axis of ordinates represents the cylinder internal temperature in the top stage, the exhaust valve lift amount in the middle stage, and the fuel injection in the bottom stage. With respect to the control of injection timing, the fuel injection map corresponding to the load and engine speed is written in the memory device of the engine controller 15 in Fig. 1, and in addition, by comparing the injection start timing θi determined by the fuel injection timing map and the valve closure timing θec determined by the valve closure timing map, when the injection timing θi is earlier than the valve closure timing θec, a control program is incorporated so as to delay the injection timing θi from the valve closure timing θec by crank angle α as shown in Fig.12.

### (Outline of combustion control by engine speed and load)

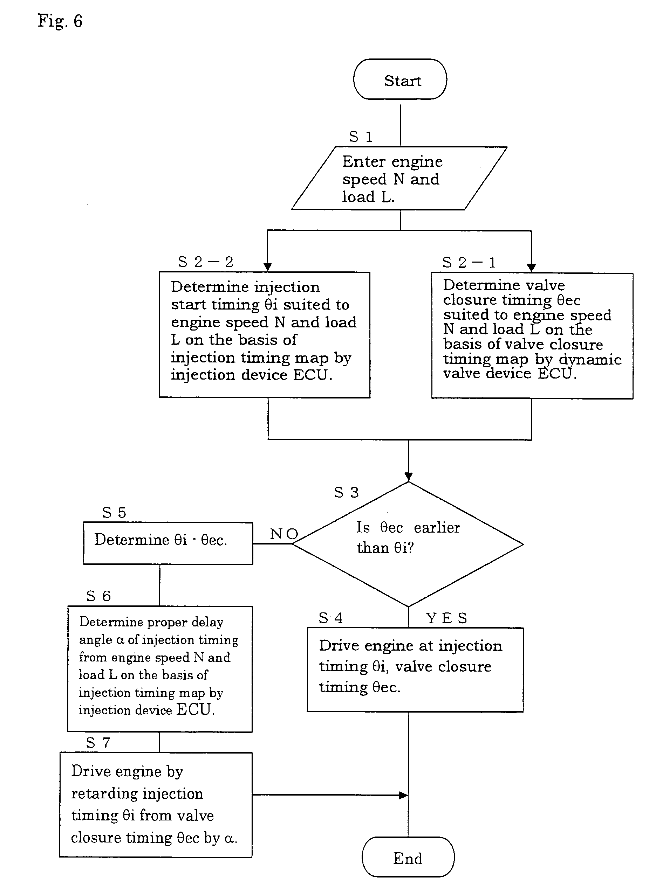

Fig. 6 is a flowchart of combustion control of engine by engine speed N and load (equivalent ratio) L, and In Fig. 6, however, the EGR rate, intake air temperature, air flow rate, and cooling water temperature are not taken into consideration.

At step S1 in Fig. 6, detected engine speed N and load L are entered, and at step S2-1, valve closure timing θec is determined for obtaining an optimum ignition timing depending on the input values of engine speed N and load L on the basis of valve closure timing map (Fig. 11) by means of actuating valve system ECU 32 (Fig. 1).

At step S2-2, on the other hand, an optimum injection timing depending on the engine speed and load is determined on the basis of injection timing map by means of injection valve device ECU 31 (Fig. 1). Specifically, injection start timing θi and injection end timing are determined.

Advancing to step S3 from step S2-1, 2-2, valve closure timing θec and injection start timing θi are compared, and it is judged whether valve closure timing θec is earlier than injection start timing θi or not, and if Yes, that is, if valve closure timing θec is earlier, the process goes to step S4, and the fuel injection valve 7 and variable actuating valve system for exhaust 11 in Fig. 1 are controlled so as to achieve the determined valve closure timing θec and injection timing θi.

If No at step S4, that is, if valve closure timing θec is later than injection start timing θi, in this state, injection combustion passes through exhaust hole 6, and at step S5, the difference of injection start timing θi and valve closure timing θec is determined, and at step S6, an appropriate delay angle α for valve closure timing θec is determined, and at step S7, injection start timing θi is changed to a timing delayed by angle α from valve closure timing θec, and thereby fuel injection valve 7 and variable actuating valve system for exhaust 11 in Fig. 1 are controlled.

Control of effective compression ratio and self-ignition timing by change of reopened valve closure timing θec is more specifically described by referring to Fig. 7. In Fig. 7, during operation with self-ignition temperature being at Tf2, in order to obtain an optimum ignition timing E2 near top dead center TDC, it is required to change the cylinder internal temperature corresponding to cylinder internal temperature variation curve A2, but to obtain this cylinder internal temperature variation curve A2, it is required to operate at reopening B2 of valve closure timing θ2. That is, when operating at self-ignition temperature of Tf2 by change of engine speed and load, valve closure timing θ2 corresponding to temperature variation curve A2 is obtained on the basis of valve closure timing map, and the variable actuating valve system for exhaust 11 (Fig. 1) is driven at valve closure timing θ2.

As the load is increased from the state of cylinder internal temperature variation curve A2, when the self-ignition temperature is lowered to Tf3, the self-ignition timing changes from point E2 to point E4, but there is a new possibility of occurrence of abnormal combustion (knocking) by excessively advanced ignition. By contrast, by delaying the valve closure timing θec to θ3 on the basis of the valve closure timing map, the effective compression ratio is lowered and cylinder internal temperature variation curve is changed to A3, and therefore the self-ignition timing changes from point E4 to point E3 near the top dead center, so that an optimum ignition timing may be obtained.

To the contrary, when the load decreases from the state of cylinder internal temperature variation curve A2 and the self-ignition temperature is raised to Tf1, the self-ignition timing changes from point E2 to point E5, but it is later than that of the top dead center, and the firing condition is not established, which leads to risk of misfiring. By contrast, by advancing the valve closure timing θec to θ1 on the basis of valve closure timing map and raising the effective compression ratio and changing the cylinder internal temperature variation curve to A1, the self-ignition timing changes to point E1 near the top dead center, so that an optimum ignition timing may be obtained.

Thus, depending on the changes of engine speed and load, by changing the closure timing θec of reopened exhaust valve 9, an optimum effective compression ratio in each operation region is realized, and thereby the self-ignition timing can be freely controlled to the top dead center or a nearby optimum timing.

In Fig. 12, in this embodiment, the ignition timing is divided into two sections of early injection M1 and later injection M2, but the early injection M1 is set somewhere from mid-period to mid-pre period approximately in the compression stroke.

### [Control method 2]

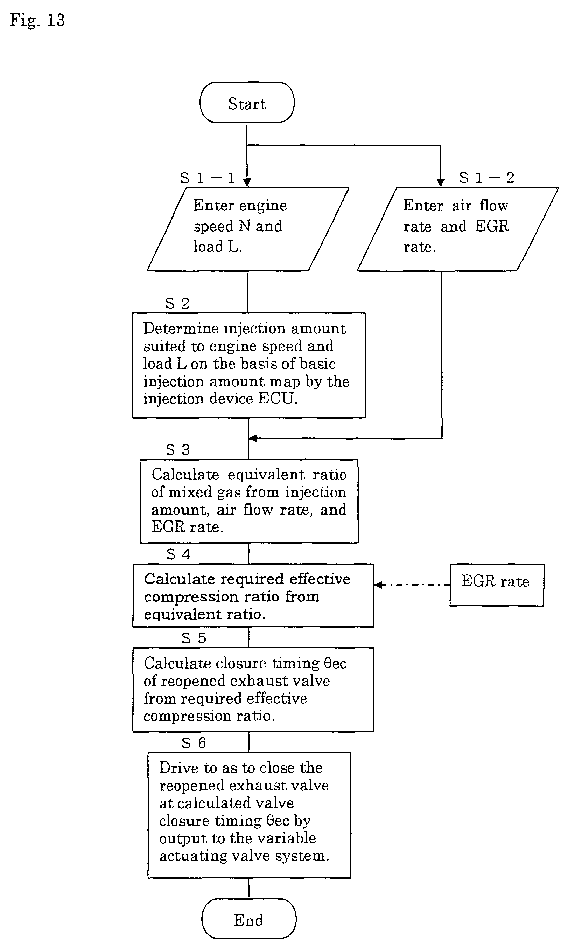

Fig. 13 to Fig. 15 relate to a control method, in which the EGR rate is added as a parameter to control method 1. Basic control is explained in control method 1, and overlapped explanation is omitted, and only the control about EGR rate is explained. As input elements, an EGR rate recognized by EGR rate recognition device 39 and an air flow rate from an air flow rate sensor 40 both shown in Fig. 1 are applied.

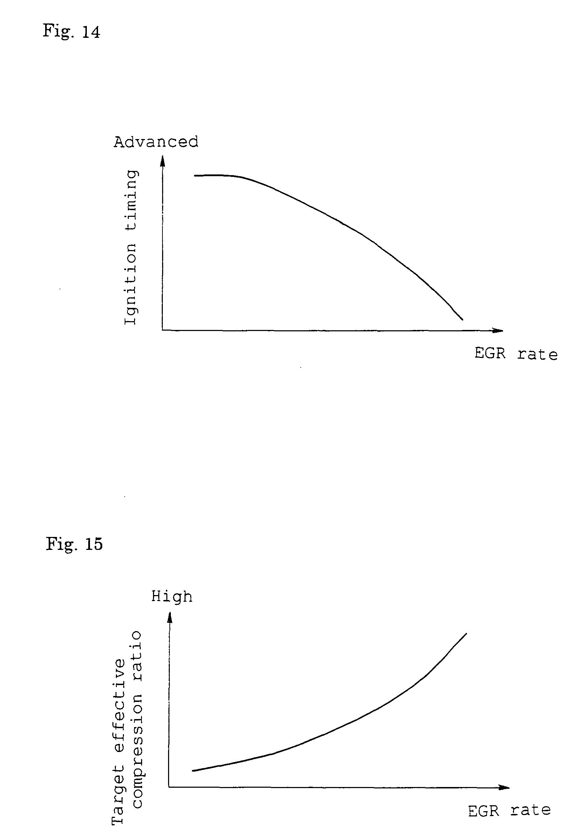

Fig. 14 shows the relation of EGR rate and self-ignition timing, in which as the EGR rate becomes larger, the CO₂ in the mixed gas in the combustion chamber increases, and the ignition timing is delayed, and the ignition performance is lowered.

Fig. 15 shows the relation of EGR rate and target effective compression ratio, and since the ignition performance is lowered by increase of EGR rate as shown above, in order to improve the ignition performance, it is required to increase the target effective compression ratio along with increase of EGR rate. For this purpose, when changing the EGR rate in the valve closure timing map as shown in Fig. 11, as the EGR rate becomes higher, the valve closure timing is set earlier, and the effective compression ratio is heightened, and therefore the ignition timing is adjusted to an optimum position near the top dead center.

Fig. 13 is a flowchart, in which, at step S1-1, engine speed N and load L are entered, and the EGR rate and air flow rate are entered at step S1-2. At step S2, an optimum basic injection amount is determined by injection device ECU from the input values of engine speed N and load L on the basis of injection amount map, and the process goes to step S3. At step S3, the equivalent ratio of mixed gas is determined from the basic injection amount, EGR rate and air flow rate, and the process goes to step S4.

At step S4, the effective compression amount is determined from the obtained equivalent ratio, and the process goes to step S5. At step S5, valve closure timing θec is determined from the obtained effective compression ratio, and the process goes to step S6, and the valve closure timing θec of reopened exhaust valve is changed to the determined valve closure timing.

Alternatively, in other flow, at step S3, a provisional equivalent ratio can be calculated from the injection amount and air flow rate, and by adding the EGR rate as indicated by broken line at step S4, an actual equivalent ratio of mixed gas can be determined.

In short, basically, it is controlled to advance the valve closure timing θec and heighten the effective compression ratio in the event of increase of EGR rate, and on the contrary, to retard the valve closure timing θec and lower the effective compression ratio in the event of decrease of EGR rate.

### [Control method 3]

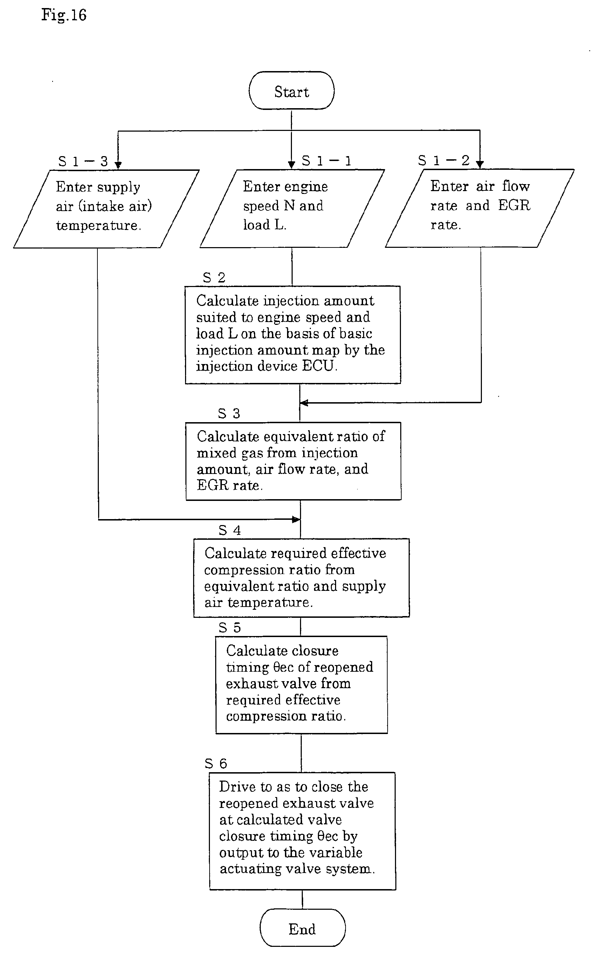

Fig. 16 to Fig. 18 relate to a control method, in which the supply air (intake air) temperature is added as another parameter to control method 2. The control method with parameters other than intake air temperature is explained in control methods 1 and 2, and therefore overlapped explanation is omitted, and only the control about intake air temperature is explained. As input element for control, a supply air (intake air) temperature is given from intake air temperature sensor.

Since Fig. 1 shows a diesel engine provided with a supercharger 16, in the explanation of control method 2, intake air, intake air temperature, and intake air temperature sensor are explained as supply air, supply air temperature, and supply air temperature sensor, respectively.

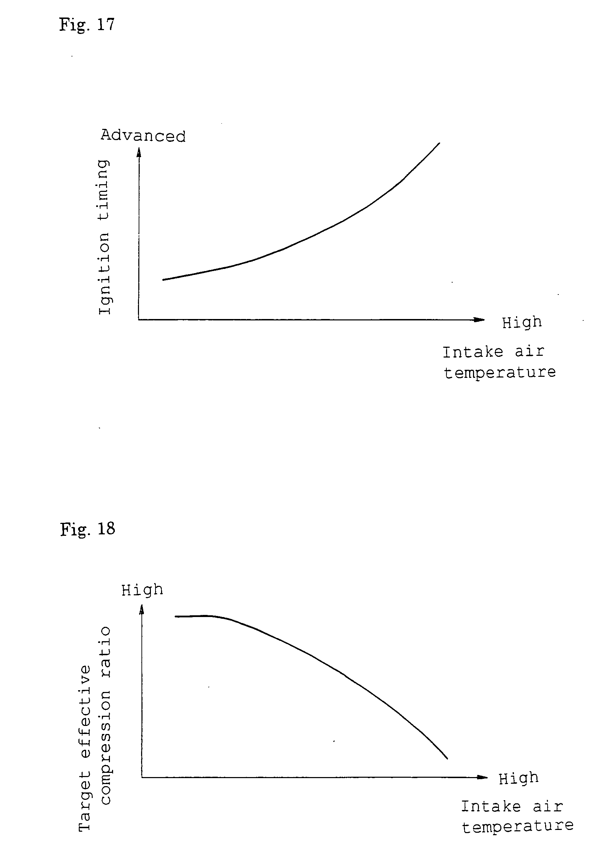

Fig. 17 shows the relation of supply air temperature and ignition timing, in which as the supply air temperature declines, the ignition timing is delayed, and the ignition performance is lowered.

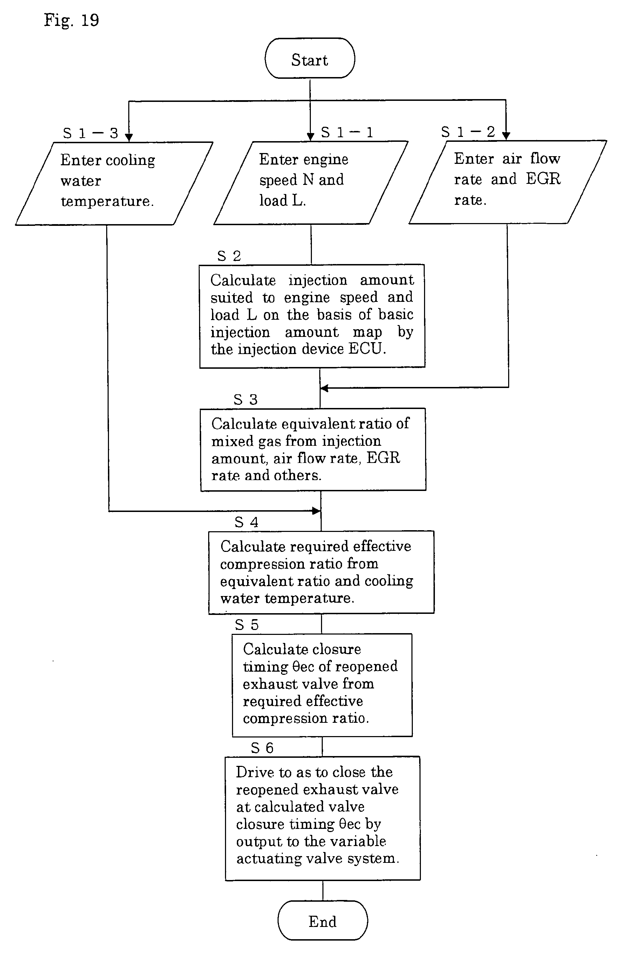

Fig. 18 shows the relation of supply air temperature and target effective compression ratio, and since the ignition performance is lowered by decline of supply air temperature as stated above, in order to improve the ignition performance, it is required to increase the target effective compression ratio along with decline of supply air temperature. For this purpose, when considering the change of supply air temperature in the valve closure timing map in Fig. 11, along with decline of supply air temperature, the valve closure timing θec is set earlier, so that the self-ignition timing may come to an optimum position near the top dead center.

Fig. 16 is a flowchart, in which, steps S1-1, S1-2, S2, and S3 are same as in Fig. 13, and overlapped explanation is omitted. At step S1-3, parallel to engine speed and other, the supply air temperature is entered. At step S4, required effective compression ratio is determined from the equivalent ratio and supply air temperature obtained at step S3, and the process goes to step S5. At step S5, valve closure timing θec is determined from the obtained required effective compression ratio, and the process goes to step S6, and the valve closure timing θec of reopened exhaust valve is changed to the determined valve closure timing.

In short, basically, it is controlled to advance the valve closure timing θec and heighten the effective compression ratio in the event of decline of supply air (intake air) temperature, and on the contrary, to retard the valve closure timing θec and lower the effective compression ratio in the event of elevation of intake air temperature.

### [Control method 4]

Fig. 19 to Fig. 21 relate to a control method, in which the cooling water temperature is added as another parameter to control method 2. The control method with parameters other than cooling water temperature is explained in control methods 1 and 2 and therefore only the control about cooling water temperature is explained. As input element for control, cooling water temperature is given from cooling water temperature sensor 42 in Fig. 1.

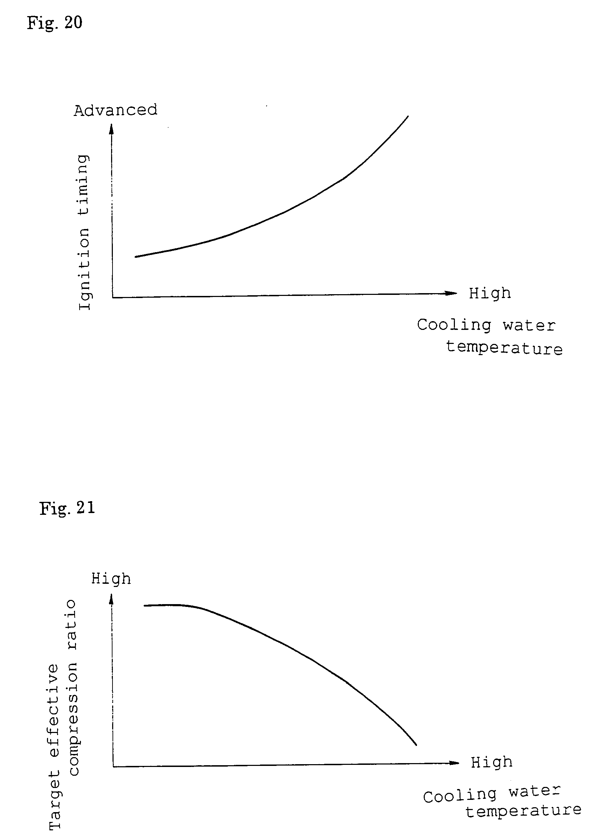

Fig. 20 shows the relation of cooling water temperature and self-ignition timing, in which as the cooling water temperature declines, the cylinder temperature is lowered, and the ignition timing is delayed, and the ignition performance is lowered.

Fig. 21 shows the relation of cooling water temperature and target effective compression ratio, and since the ignition performance is lowered by decline of cooling water temperature as stated above, in order to improve the ignition performance, it is required to increase the target effective compression ratio along with decline of cooling water temperature. For this purpose, when considering the change of cooling water temperature in the valve closure timing map in Fig. 11, along with decline of cooling water temperature, the valve closure timing θec is set earlier, so that the self-ignition timing θec may come to an optimum position near the top dead center.

Fig. 19 is a flowchart, in which, steps S1-1, S1-2, S2, and S3 are same as in Fig. 13, and explanation is omitted. At step S1-3, parallel to engine speed and others, the cooling water temperature is entered. At step S4, required effective compression ratio is determined from the equivalent ratio and cooling water temperature obtained at step S3, and the process goes to step S5. At step S5, valve closure timing θec is determined from the obtained required effective compression ratio, and the process goes to step S6, and the valve closure timing θec is changed to the determined valve closure timing.

In short, basically, it is controlled to advance the valve closure timing θec and heighten the effective compression ratio in the event of decline of cooling water temperature, and on the contrary, to retard the valve closure timing θec and lower the effective compression ratio in the event of elevation of cooling water temperature.

### [Control method 5]

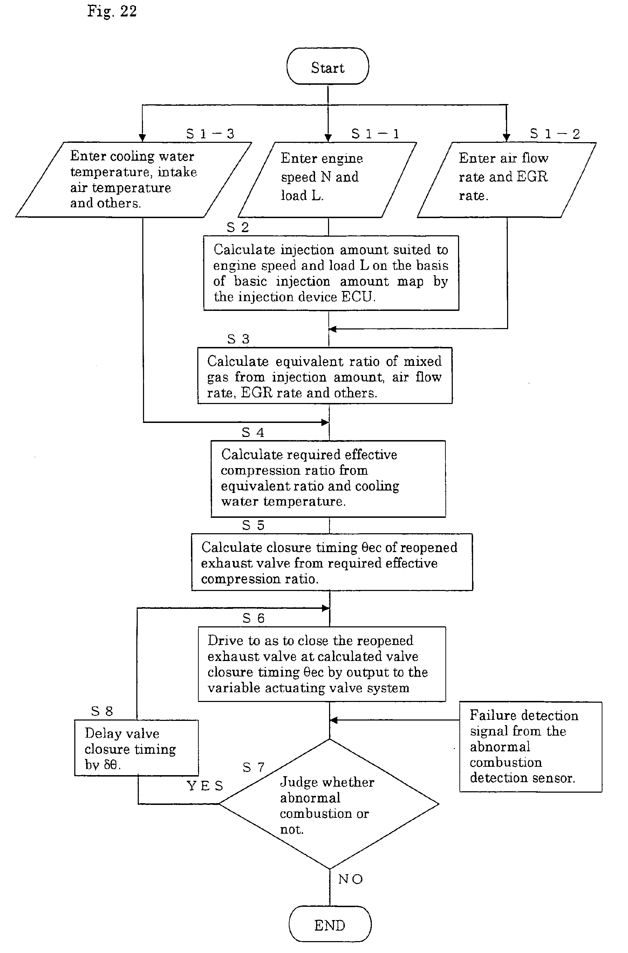

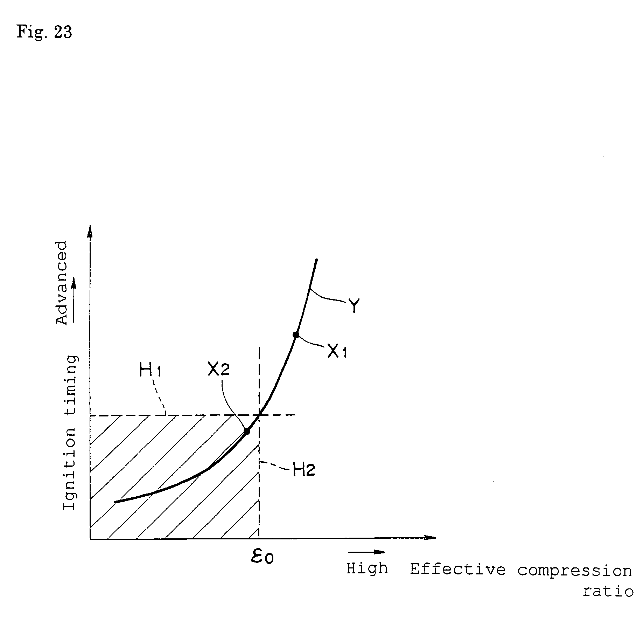

Fig. 22 and Fig. 23 relate to a control method, in which detection of abnormal combustion by abnormal combustion sensor 43 in Fig. 1 is added as another parameter to control methods 1 to 4, in order to prevent more securely combustion noise due to knocking or sudden pressure elevation due to excessively advanced ignition. As the abnormal combustion sensor 43, specifically, a knock sensor is used. The control method with parameters other than knock sensor is explained in control methods 1 to 4, and therefore only the control about knock sensor is explained.

Fig. 23 shows the ignition performance, in which the axis of abscissas denotes the effective compression ratio, the axis of ordinates represents the ignition timing, and Y shows the self-ignition characteristic curve. The shaded area is the effective operation region (combustion allowable region) enclosed by allowable ignition timing limit H1 and allowable effective compression ratio limit H2, and when the ignition characteristic is out of the effective operation region, knocking occurs due to excessively advanced ignition.

Thus, when the ignition characteristic is out of the effective operation region as described above, it is controlled to retard the closure timing θec of reopened exhaust valve and lower the effective compression ratio so as to return to the effective region. However, when lowering the effective compression ratio, the effective compression ratio is lowered so as to maintain an effective compression ratio as high as possible within the effective operation region.

More specifically, when operating on point X1 outside of the effective operation region on the ignition characteristic curve Y, if knocking occurs and it is detected by the abnormal combustion sensor 43, the valve closure timing is delayed so as to lower the effective compression ratio to near point X2 close to limit lines H1, H2 of the effective operation region.

Fig. 22 is a flowchart, in which, steps S1 to S6 are combined steps of control methods 2 to 5, and explanation is omitted. At step S7, judging whether or not failure detection signal is entered from abnormal combustion detection sensor, If No, or if there is no abnormal combustion, the control is terminated immediately. If Yes at step S7, that is, if knocking occurs due to excessively advanced ignition, the process goes to step S8, and the valve closure timing θec is delayed by specified angle δθ, and the process returns to step S6.

In short, if combustion is controlled on the basis of detection of engine speed, load, intake air temperature or EGR, in case knocking or other abnormal combustion occurs, it is controlled by the abnormal combustion sensor in such a manner abnormal combustion is eliminated.

As abnormal combustion sensor, for example, a sensor for detecting misfiring due to ignition delay may be also used, and in this case by advancing the reopened valve closure timing when detecting abnormal combustion, the effective compression ratio is raised and the ignition timing can be advanced.

### [Control method 6]

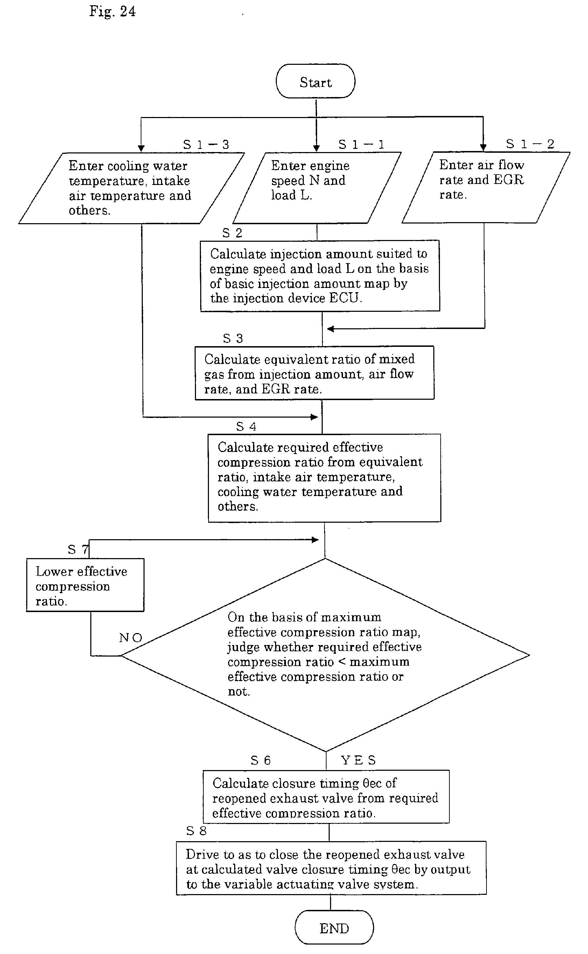

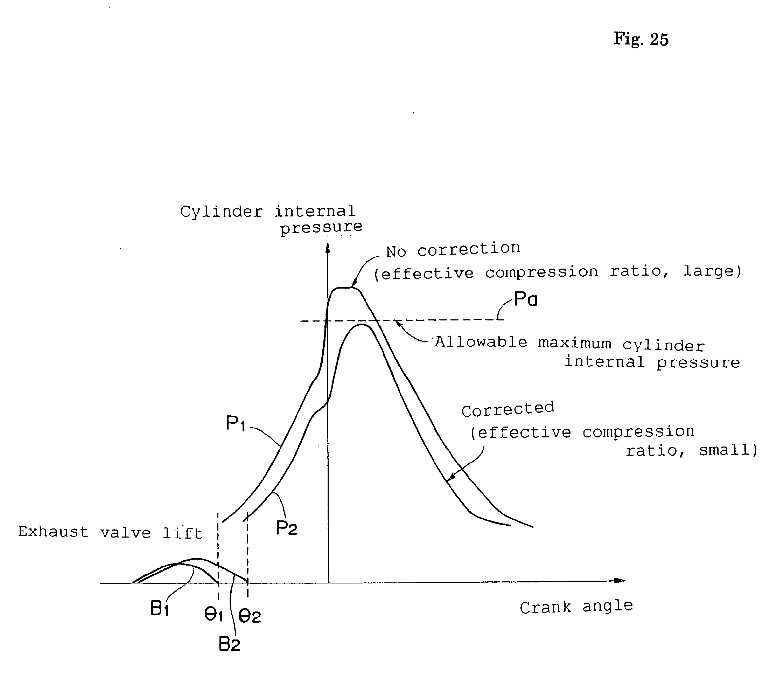

Fig. 24 and Fig. 25 relate to a control method, in which control for suppressing the cylinder internal pressure not to exceed the allowable maximum cylinder internal pressure in each operation region is added to control methods 1 to 4. In each operation region, a limiting effective compression ratio map corresponding to the allowable maximum cylinder internal pressure is compiled, and the reopened valve closure timing is delayed so that the instruction signal to the variable actuating valve system for exhaust may not exceed the value of the limiting effective compression ratio map, and it is controlled so that the cylinder internal pressure may not exceed the allowable maximum cylinder internal pressure.

In Fig. 25, the axis of ordinates shows the exhaust valve lift and cylinder internal pressure, and the axis of abscissas denotes the crank angle, and in this Fig. 25, supposing the allowable cylinder internal pressure in a certain operation region to be Pa, when operating at valve closure timing θ1 of reopening B1, the cylinder internal pressure P1 exceeds the allowable maximum cylinder internal pressure Pa, and the cylinder is influenced.

By contrast, by delaying the valve closure timing to θ2 on the basis of maximum effective compression ratio map, the effective compression ratio is lowered, until reaching the cylinder internal pressure P2 lower than the allowable maximum cylinder internal pressure Pa. The degree of lowering the effective compression ratio is set so that the maximum point of cylinder internal pressure P2 may be stopped around the allowable maximum cylinder internal pressure Pa. That is, it is set to have the cylinder internal pressure as high as possible within the region of the allowable maximum cylinder internal pressure Pa.

Fig. 24 is a flowchart, in which, steps S1 to S4 are combined steps of control methods 2 to 5, and explanation is omitted. At step S5, judging whether or not the required effective compression ratio is smaller than the value of maximum effective compression ratio of the maximum effective compression ratio map, and if Yes or if smaller, the process goes to step S6, and the valve closure timing θec corresponding to the required effective compression ratio is determined, and the engine is driven at the determined valve closure timing θec and injection timing θi.

If No at step S5, that is, if the required effective compression ratio is larger than the maximum effective compression ratio of the maximum effective compression ratio map, the process goes to step S7, and the required effective compression ratio is corrected so as to be smaller than the maximum effective compression ratio, and the process returns to step S5 again.

In short, if combustion is controlled on the basis of detection of engine speed, load, intake air temperature or EGR, in case the cylinder internal pressure exceeds the allowable maximum cylinder internal pressure, the effective compression ratio is lowered by retarding the valve closure timing θec, thereby preventing effects on the cylinder due to excessive elevation of cylinder internal pressure.

### [Other embodiments of the invention]

The invention may be also applied in gas or gasoline direct injection type internal combustion engines.

### Industrial Applicability

As described herein, the control method of premix compression self-igniting internal combustion engine of the invention may be applied in a wide range of internal combustion engines, and is particularly suited to control of diesel engine.

## Claims

1. A control method of premix compression self-igniting internal combustion engine for premixing air and fuel in a combustion chamber, and self-igniting the mixture by compression, comprising the steps of temporarily reopening an exhaust valve in compression stroke, freely varying the reopened valve closure timing, and changing the effective compression ratio to an effective compression ratio capable of obtaining an optimum self-ignition timing in each operation region.

2. The control method of premix compression self-igniting internal combustion engine of claim 1, wherein the reopened valve closure timing is controlled so as to heighten the effective compression ratio in a small load operation region, and lower the effective compression ratio along with the increase of load.

3. The control method of premix compression self-igniting internal combustion engine of claim 1, wherein a reopened valve closure timing map is compiled by describing the vale closure timing for obtaining an optimum ignition timing in each operation region depending on the engine speed and load, the engine speed and load are detected during operation of the engine, and the reopened valve closure timing is varied on the basis of the valve closure timing map.

4. The control method of premix compression self-igniting internal combustion engine of claim 1, wherein the fuel injection start timing is delayed from the reopened valve closure timing.

5. The control method of premix compression self-igniting internal combustion engine of claim 1, wherein the engine includes an EGR device, and EGR rates are detected, and thereby the effective compression ratio is heightened by advancing the reopened valve closure timing in an operation region of high EGR rate, and the effective compression ratio is lowered by retarding the reopened valve closure timing in an operation region of low EGR rate.

6. The control method of premix compression self-igniting internal combustion engine of claim 1, wherein the intake air temperature is detected, and the effective compression ratio is lowered by retarding the reopened valve closure timing when the intake air temperature is high, and the reopened valve closure timing is advanced when the intake air temperature is low.

7. The control method of premix compression self-igniting internal combustion engine of claim 1, wherein the cooling water temperature is detected, and the effective compression ratio is heightened by advancing the closure timing of the reopened exhaust valve when the cooling water temperature is low, and the reopened valve closure timing is retarded when the cooling water temperature is high.

8. The control method of premix compression self-igniting internal combustion engine of any one of claims 1 to 7, wherein knocking or other abnormal combustion is detected by an abnormal combustion detection sensor, and the reopened valve closure timing is retarded in the event of abnormal combustion and controlled to be changed to a highest effective compression ratio in a range not to cause abnormal combustion.

9. The control method of premix compression self-igniting internal combustion engine of any one of claims 1 to 8, wherein a limiting effective compression ratio map for suppressing the maximum cylinder internal pressure within an allowable range in each operation region is compiled, and the reopened valve closure timing is set so as not to exceed the limiting effective compression ratio in each operation region.
